# EUROPEAN PATENT APPLICATION

(11) **EP 0 825 605 A1**
(43) Date of publication of application: **25.02.1998**
(21) Application number: 96306045.4
(22) Date of filing: 19.08.1996
(51) Int. Cl.: G11B 23/087, G11B 23/04

(54) **Digital audio cartridge**

(71) Applicant: Sycom International Corp., Taichung City (TW)
(72) Inventor: Luo, Chin-Kuang, c/o Sycom Int. Corp., Taichung City (TW)
(74) Representative: Pluckrose, Anthony William

(57) **Abstract**

This invention relates to a digital audio cartridge (as shown in Figure 1) which is adapted to fit in a cassette holder of a standard tape deck (8) with a magnetic head (80), and includes a memory unit (2), a processing unit (10) for retrieving digital audio data from the memory unit (2), a sound synthesizer unit (3)for processing the digital audio data so as to generate a digital sound signal output, a converter unit (4) for converting the digital sound signal output into an analog sound signal, and a magnetic playback output unit (5) disposed adjacent to the magnetic head (80) when the digital audio cartridge is received in the cassette holder of the tape deck (8).

## Description

The invention relates to an audio cartridge, more particularly to a digital audio cartridge which is capable of storing a large amount of audio data and high quality reproduction of the audio data.

Presently, audio data is stored in magnetic cassette tapes for playback in standard tape decks even though conventional magnetic cassette tapes suffer from numerous drawbacks. For example, mildewing of the magnetic cassette tape easily occurs when the latter is used in a humid place. Moreover, the quality of sound reproduced from magnetic cassette tapes deteriorates after repeated use, and the magnetic powder on the cassette tape easily accumulates on the magnetic head of the tape deck, thereby affecting adversely the operation of the tape deck and necessitating frequent cleaning of the tape deck to avoid damage thereto. In addition, the cassette tape sometimes gets entangled with the rollers of the tape deck, thereby resulting in damage to the cassette tape. Another drawback of conventional magnetic cassette tapes resides in that they have a relatively small storage capacity.

One object of the present invention is to provide a digital audio cartridge which is capable of storing a large amount of audio data.

A second object of the present invention is to provide a digital audio cartridge which can ensure that the quality of reproduced sound does not deteriorate even after repeated use.

A third object of the present invention is to provide a digital audio cartridge which can be control led via remote control so as to select a particular song for playback.

A fourth object of the present invention is to provide a digital audio cartridge which can be used with a set of earphones so as to serve as a portable sound reproducing device.

A fifth object of the present invention is to provide a digital audio cartridge which can provide a high fidelity sound output.

A sixth object of the present invention is to provide a digital audio cartridge with a replaceable data memory device.

Accordingly, the digital audio cartridge of the present invention is adapted to fit in a cassette holder of a standard tape deck with a magnetic head, and comprises:
a memory unit for storing digital audio data therein;
a processing unit connected electrically to the memory unit and operable so as to retrieve the digital audio data stored in the memory unit;
a sound synthesizer unit connected electrically to the processing unit so as to receive the digital audio data therefrom, the sound synthesizer unit processing the digital audio data so as to generate a digital sound signal output;
a converter unit, which is connected electrically to the sound synthesizer unit, for converting the digital sound signal output into an analog sound signal; and
a magnetic playback output unit adapted to be disposed adjacent to the magnetic head of the tape deck when the digital audio cartridge is received in the cassette holder of the tape deck, the magnetic playback output unit being connected to the converter unit so as to receive the analog sound signal therefrom, the magnetic playback output unit generating a magnetic field corresponding to the analog sound signal and to be sensed by the magnetic head so as to enable the tape deck to reproduce the digital audio data stored in the memory unit.

Other features and advantages of the present invention will become apparent in the following detailed description of the preferred embodiments with reference to the accompanying drawings, of which:
Figure 1 is a schematic circuit block diagram of the first preferred embodiment of a digital audio cartridge according to the present invention;
Figure 2 is a schematic view which illustrates the first preferred embodiment when installed in a cassette holder of a standard tape deck;
Figure 3 is a schematic view which illustrates the first preferred embodiment when a play button of the standard tape deck is pressed while the digital audio cartridge is in the cassette holder;
Figure 4 is an exploded perspective view of the first preferred embodiment;
Figure 5 is a perspective view of the first preferred embodiment;
Figure 6 is a perspective view of the second preferred embodiment of a digital audio cartridge according to the present invention;
Figure 7 is an exploded perspective view of the third preferred embodiment of a digital audio cartridge according to the present invention; and
Figure 8 is a perspective view of the fourth preferred embodiment of a digital audio cartridge according to the present invention.

Before the present invention is described in greater detail, it should be noted that like elements are denoted by the same reference numerals throughout the disclosure.

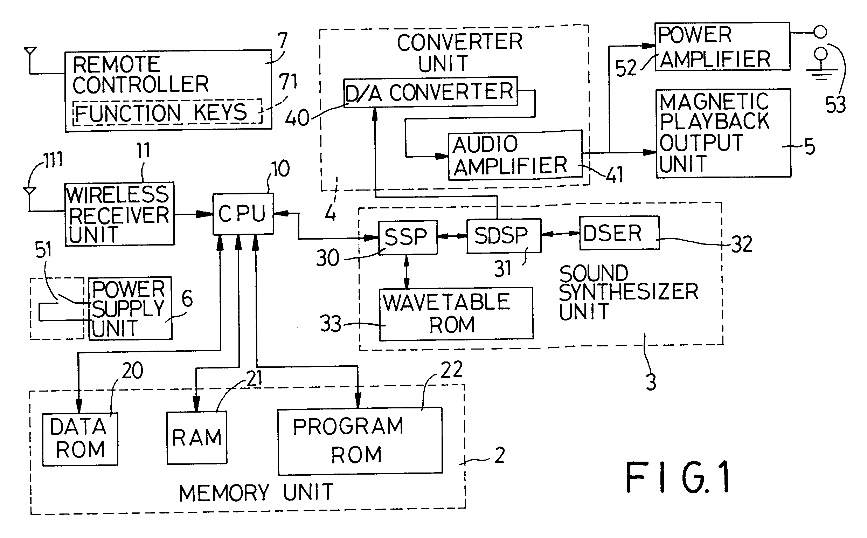

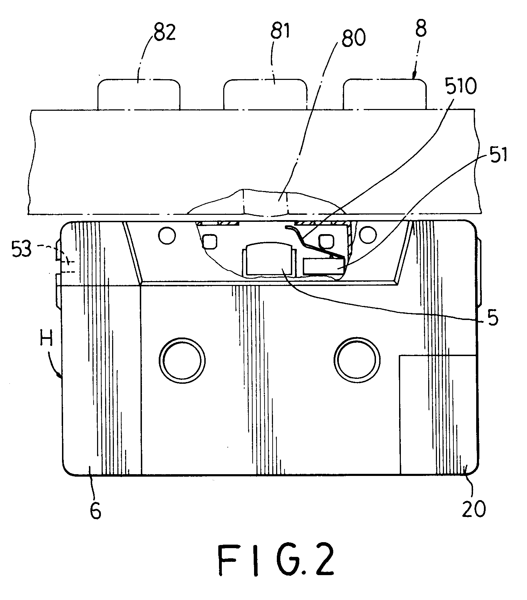

Referring to Figure 1, the first preferred embodiment of a digital audio cartridge according to the present invention is shown to comprise a central processing unit (CPU) 10, a memory unit 2, a sound synthesizer unit 3, a converter unit 4, a magnetic playback output unit 5, a power supply unit 6 and a wireless remote controller 7. The digital audio cartridge has a size and shape corresponding to that of a standard magnetic cassette tape and is adapted to fit in a cassette holder of a standard tape deck 8, as shown in Figure 2.

The CPU 10, which is connected to the memory unit 2 and the sound synthesizer unit 3, retrieves data from the memory unit 2 and provides the same to the sound synthesizer unit 3. The CPU 10 is connected to a wireless receiver unit 11 which is provided with an antenna 111. The wireless receiver unit 11 receives wireless signals transmitted by the remote controller 7 and provides the same to the CPU 10 so as to control operation of the latter.

The memory unit 2 is connected to the CPU 10 and includes a data memory device 20, preferably a read only memory (ROM), a buffer memory device 21, preferably a random access memory (RAM), and a program memory device 22, preferably a read only memory (ROM). In this embodiment, the data memory device 20 contains compressed digital audio data which are MIDI files that conform with the General MIDI (GM) system. Any known digital compression technique may be employed to result in the capability to store a large number of songs and in efficient use of the data memory device 20. In use, upon operation of the remote controller 7 to input a selected song number, the CPU 10 retrieves program instructions from the program memory device 22 and reads corresponding compressed digital audio data from the data memory device 20. The CPU 10 decompresses the digital audio data read from the data memory device 20 and temporarily stores the decompressed digital audio data in the buffer memory device 21 before providing the same to the sound synthesizer unit 3.

The sound synthesizer unit 3 receives the decompressed digital audio data from the CPU 10 and includes a sound synthesizer processor (SSP) 30, a sound digital signal processor (SDSP) 31 and a digital sound effect storage RAM (DSER) 32. The SSP 30 is connected to the CPU 10 and a wavetable ROM 33. In this embodiment, the SSP 30 and the wavetable ROM 33 are built into a single integrated circuit (IC) chip. The wavetable ROM 33 complies with the General MIDI (GM) system and contains 128 musical instrument sounds. The SSP 30 receives the decompressed digital audio data from the CPU 10 and processes the same so as to obtain digital sound data. The SDSP 31, which is connected to both the SSP 30 and the DSER 32, receives the digital sound data from the SSP 30 and processes the same to result in a realistic, high fidelity digital sound signal output.

In this embodiment, the SSP 30 is the ES5506 ENSONIQ "OTTO" Soundscape Wavetable Synthesizer which has the wavetable ROM 33 built therein. The SDSP 31 is the ES5510 ENSONIQ "ESP" Signal Processor. The SSP 30 has thirty-two independent channels and is capable of simultaneously generating thirty-two different instrument sounds. Upon reception of the decompressed digital audio data from the CPU 10, the SSP 30 converts the same into address data for accessing the wavetable ROM 33 to obtain the corresponding digital sound data. The SSP 30 then provides the digital sound data to the SDSP 31 in a serial manner. The SDSP 31 is programmed to operate in combination with the DSER 32 to perform delay, frequency analysis, digital filtering, and transform and other calculations so as to generate different sound effects, such as reverberation, tremolo, echo, surround, etc., thereby resulting in a realistic, high fidelity digital sound signal output corresponding to the desired acoustic environment.

The converter unit 4 includes a digital-to-analog (D/A) converter 40 which is connected to the SDSP 31 and which converts the digital sound signal output of the latter into an analog sound signal. The converter unit 4 further includes an audio amplifier 41 for amplifying the analog sound signal from the converter 40.

Referring to Figures 1 to 3, the magnetic playback output unit 5 is connected to the audio amplifier 41 and receives the amplified analog sound signal from the same. The magnetic playback output unit 5 is substantially similar in construction to the magnetic head 80 of the standard tape deck 8, and consists of a coil wound around a magnetic iron core. The magnetic playback output unit 5 is aligned with the magnetic head 80 when the digital audio cartridge is disposed in the cassette holder of the tape deck 8. Thus, the magnetic playback output unit 5 is capable of generating a magnetic field which corresponds to the amplified analog sound signal and which is to be sensed by the magnetic head 80 of the tape deck 8, thereby enabling the tape deck 8 to reproduce the audio data stored in the data memory device 20.

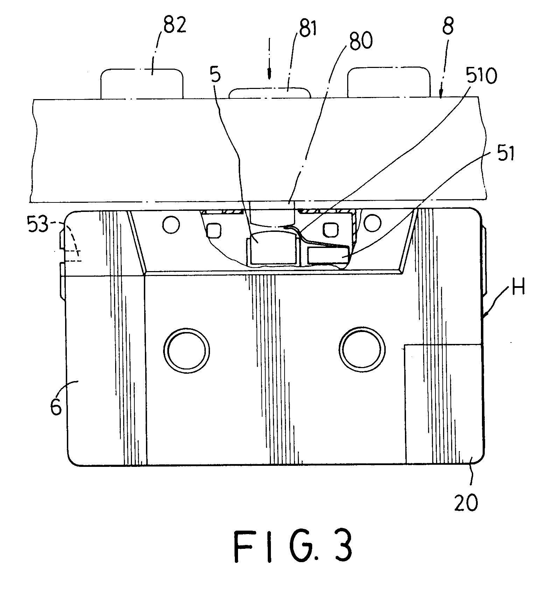

A microswitch 51 is disposed adjacent to the magnetic playback output unit 5 and is connected electrically to the power supply unit 6 so as to control operation of the latter. The microswitch 51 has a switch contact 510 which extends spacedly along a front edge of the magnetic playback output unit 5. When a play button 81 of the tape deck 8 is depressed, the magnetic head 80 moves toward the magnetic playback output unit 5 and presses against the switch contact 510, thereby enabling the microswitch 51 to activate the power supply unit 6, as shown in Figure 3.

Referring again to Figure 2, the microswitch 51 is initially in an open circuit condition. When the play button 81 of the tape deck 8 is depressed, the microswitch 51 is closed to activate the power supply unit 6, as shown in Figure 3. When the stop button 82 of the tape deck 8 is operated, the magnetic head 80 moves away from the magnetic playback output unit 5. The magnetic head 80 ceases to press against the switch contact 510, thereby opening the microswitch 51 so as to deactivate the power supply unit 6.

It should be noted that the particular arrangement of the microswitch 51 and the magnetic playback output unit 5 results in efficient use of power since the power supply unit 6 remains deactivated until the play button 81 of the tape deck 8 is depressed.

Referring once more to Figure 1, the main purpose of the wireless remote controller 7, which is provided with function keys 71, is to control the data searching operation of the CPU 10. The functions of the remote controller 7 and the CPU 10 may be expanded to include programming of selected songs to be reproduced, repeated playback of selected songs, etc.

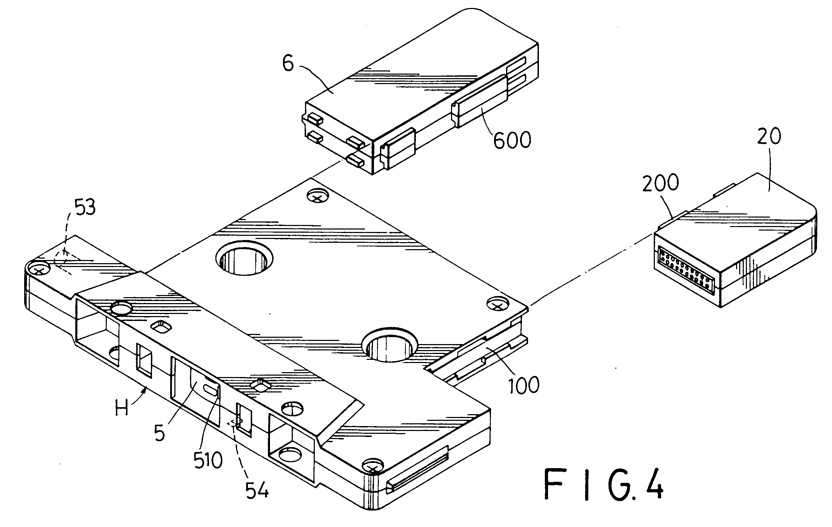

As shown in Figure 4, the digital audio cartridge is further provided with a manual switch 54 for overriding the microswitch 51. Thus, the power supply unit 6 can be activated even when the digital audio cartridge is not disposed in the cassette holder of the tape deck 8.

The digital audio cartridge may further include a power amplifier 52 connected to the audio amplifier 41 and an earphone jack 53 which is connected to the power amplifier 52 and which is adapted to be connected to a set of earphones (not shown). Thus, when the manual switch 54 is operated, the audio data in the data memory device 20 can be reproduced via the earphones even without the use of the tape deck 8. Thus, the digital audio cartridge of the present invention can also be operated as a portable sound reproducing device.

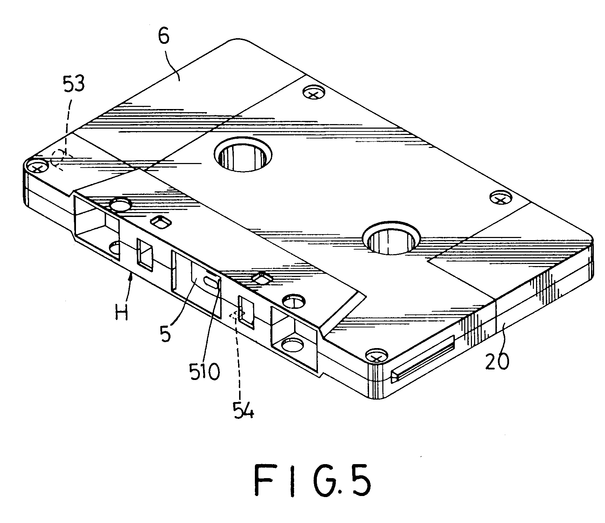

Referring to Figures 4 and 5, the digital audio cartridge includes a housing (H). In this embodiment, the data memory device 20 and the power supply unit 6 are in the form of modules which are mounted detachably to the housing (H) by means of retaining projections 200 and 600 on the data memory device 20 and the power supply unit 6 that engage slide grooves 100 on two sides of the housing (H). Thus, in the present embodiment, the data memory device 20 may be easily replaced, and the power supply unit 6 can be detached for recharging purposes.

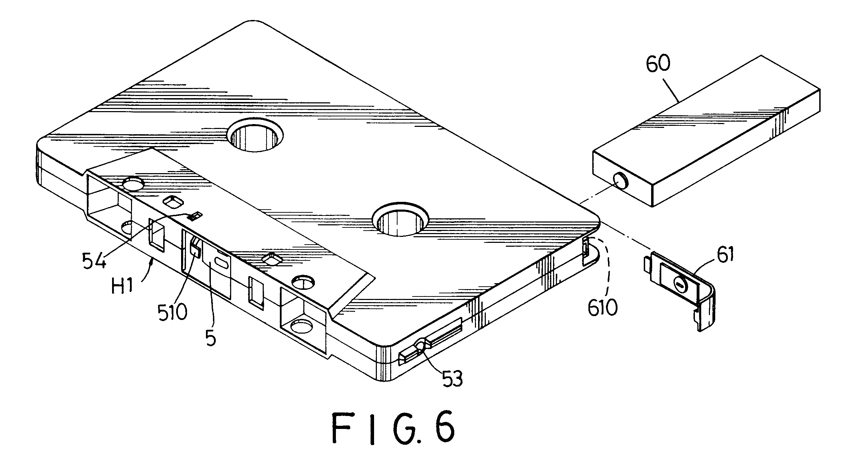

Figure 6 illustrates the second preferred embodiment of a digital audio cartridge according to the present invention. As shown, the second preferred embodiment is substantially similar to the first preferred embodiment, except that the data memory device is built into the housing (H1), and the housing (H1) is formed with a battery chamber 610 with a removable cover 61. The power supply unit is in the form of a battery 60 which is to be disposed in the battery chamber 610.

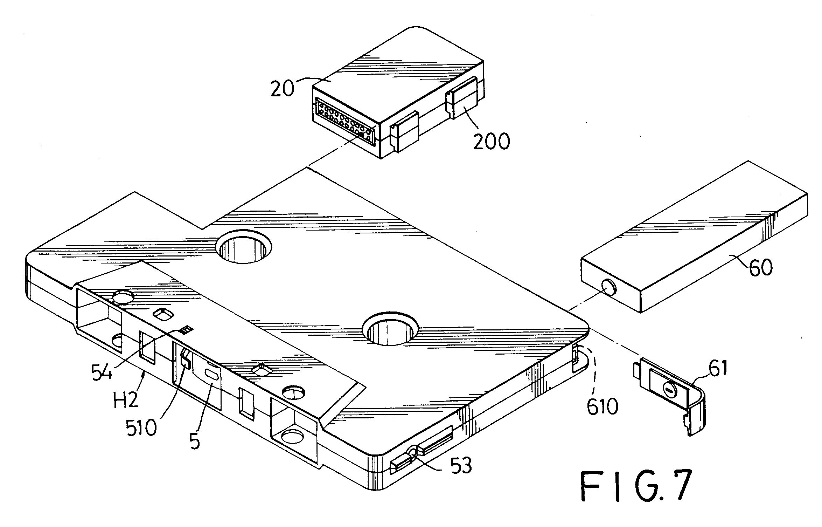

Figure 7 illustrates the third preferred embodiment of a digital audio cartridge according to the present invention. In this embodiment, the data memory device 20 is mounted detachably to the housing (H2) in a manner similar to that of the first preferred embodiment, while the power supply unit is in the form of a battery 60 which is to be stored in the battery chamber 610 of the housing (H2) in a manner similar to that of the second preferred embodiment.

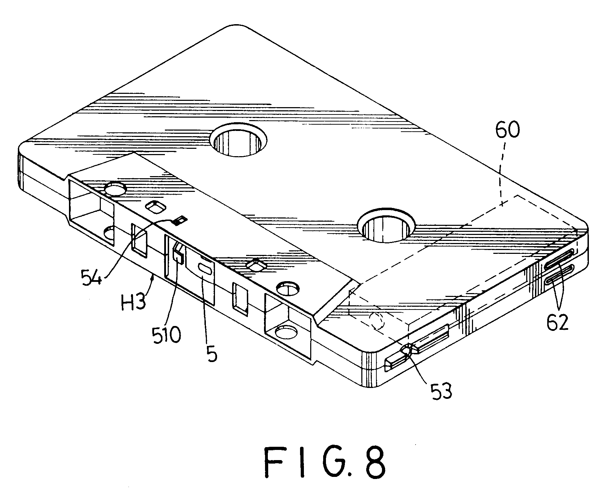

Figure 8 illustrates the fourth preferred embodiment of a digital audio cartridge according to the present invention. In this embodiment, the data memory device (not shown) and the power supply unit are built into the housing (H3). The power supply unit is in the form of a rechargeable battery 60, and the housing (H3) is provided with charging contacts 62 which are connected electrically to the battery 60 to permit recharging of the same.

The advantages and characterizing features of the digital audio cartridge according to the present invention are as follows:
1. The digital audio cartridge mainly utilizes integrated circuit components so as to result in a small and compact structure that is adapted to fit in the cassette holder of a standard tape deck. The digital audio cartridge can also be used as a portable sound reproducing device, thereby resulting in added convenience for the consumer.
2. The data memory device, which can be replaced, is capable of storing a relatively large amount of digital audio data. In addition, the digital audio cartridge can ensure that the quality of reproduced sound does not deteriorate even after repeated use. Furthermore, the digital audio cartridge can be controlled via remote control so as to select a particular song for playback.
3. The presence of the sound synthesizer unit ensures that the digital audio cartridge can provide a high fidelity sound output.

It has thus been shown that the digital audio cartridge of the present invention eliminates all of the aforementioned drawbacks of the conventional magnetic cassette tapes. The objects of the present invention are thus achieved.

## Claims

1. A digital audio cartridge that is adapted to fit in a cassette holder of a standard tape deck (8) with a magnetic head (80), characterized by:
a memory unit (2) for storing digital audio data therein;
a processing unit (10) connected electrically to the memory unit (2) and operable so as to retrieve the digital audio data stored in the memory unit (2);
a sound synthesizer unit (3) connected electrically to the processing unit (10) so as to receive the digital audio data therefrom, the sound synthesizer unit (3) processing the digital audio data so as to generate a digital sound signal output;
a converter unit (4), which is connected electrically to the sound synthesizer unit (3), for converting the digital sound signal output into an analog sound signal; and
a magnetic playback output unit (5) adapted to be disposed adjacent to the magnetic head (80) of the tape deck (8) when the digital audio cartridge is received in the cassette holder of the tape deck (8), the magnetic playback output unit (5) being connected to the converter unit (4) so as to receive the analog sound signal therefrom, the magnetic playback output unit (5) generating a magnetic field corresponding to the analog sound signal and to be sensed by the magnetic head (80) so as to enable the tape deck (8) to reproduce the digital audio data stored in the memory unit (2).

2. The digital audio cartridge as claimed in Claim 1, further characterized by a wireless receiver unit (11) connected electrically to the processing unit (10), and a wireless remote controller (7) which is operable so as to transmit wireless control signals to the wireless receiver unit (11) for reception by the processing unit (10) in order to control operation of the processing unit (10).

3. The digital audio cartridge as claimed in Claim 1 or Claim 2, characterized in that the memory unit (2) includes a data memory device (20) connected to the processing unit (10) for storing the digital audio data therein.

4. The digital audio cartridge as claimed in Claim 3, further characterized in that the digital audio data in the data memory device (20) is compressed digital audio data, the memory unit (2) further including a buffer memory device (21) connected to the processing unit (10), the processing unit (10) decompressing the compressed digital audio data and storing decompressed digital audio data in the buffer memory device (21) before providing the decompressed digital audio data to the sound synthesizer unit (3).

5. The digital audio cartridge as claimed in any one of the preceding claims, characterized in that the digital audio data includes MIDI files.

6. The digital audio cartridge as claimed in Claim 5, further characterized in that the sound synthesizer unit (3) comprises a sound synthesizer processor (30) connected to the processing unit (10), a sound digital signal processor (31) connected to the sound synthesizer processor (30), and a digital sound effect storage memory (32) connected to the sound digital signal processor (31), the sound synthesizer processor (30) receiving the digital audio data from the processing unit (10) and processing the digital audio data to obtain digital sound data, the sound digital signal processor (31) processing the digital sound data to generate the digital sound signal output which is received by the converter unit (4).

7. The digital audio cartridge as claimed in any one of the preceding claims, further characterized by a power supply unit (6) for supplying electrical power to the digital audio cartridge.

8. The digital audio cartridge as claimed in Claim 7, further characterized by a microswitch (51) connected electrically to the power supply unit (6) and operable so as to control activation of the power supply unit (6).

9. The digital audio cartridge as claimed in Claim 8, characterized in that the microswitch (51) is disposed adjacent to the magnetic playback output unit (5) and has a switch contact (510) which extends spacedly along a front edge of the magnetic playback output unit (5), the switch contact (510) being adapted to be depressed by the magnetic head (80) of the tape deck (8) so as to activate the power supply unit (6) when the magnetic head (80) moves toward the magnetic playback output unit (5) for sensing the magnetic field that is generated by the magnetic playback output unit (5).

10. The digital audio cartridge as claimed in any one of Claims 7 to 9, further characterized by a housing (H) which has the power supply unit (6) mounted detachably thereon.

11. The digital audio cartridge as claimed in any one of Claims 7 to 9, further characterized by a housing (H1) which is formed with a battery chamber (610) with a removable cover (61), the power supply unit (6) including a battery (60) which is disposed removably in the battery chamber (610).

12. The digital audio cartridge as claimed in any one of Claims 7 to 9, further characterized by a housing (H3), the power supply unit (6) including a rechargeable battery (60) mounted in the housing (H3), the housing (H3) being provided with charging contacts (62) connected electrically to the battery (60) to permit recharging of the battery (60).

13. The digital audio cartridge as claimed in Claim 3, further characterized by a housing (Hl) which has the data memory device mounted fixedly therein.

14. The digital audio cartridge as claimed in Claim 3, further characterized by a housing (H) which has the data memory device mounted removably and replaceably thereon.

15. The digital audio cartridge as claimed in any one of the preceding claims, further characterized by a power amplifier (52)connected to the converter unit (4), and an earphone jack (53) connected to the power amplifier (52).
